# EUROPÄISCHE PATENTSCHRIFT

(11) **EP 1 123 199 B1**
(45) Veröffentlichungstag und Bekanntmachung des Hinweises auf die Patenterteilung: **11.09.2002**
(21) Anmeldenummer: 99968330.3
(22) Anmeldetag: 22.10.1999
(51) Int. Cl.: B29D 31/00, E04C 2/36

(54) **THERMOPLASTISCHE FALTWABE UND VERFAHREN ZU DEREN HERSTELLUNG**
THERMOPLASTIC FOLDED HONEYCOMB STRUCTURE AND METHOD FOR THE PRODUCTION THEREOF
CORPS ALVEOLAIRE THERMOPLASTIQUE EN ACCORDEON ET SON PROCEDE DE PRODUCTION

(30) Priorität: 24.10.1998 DE 19849085
(43) Veröffentlichungstag der Anmeldung: 16.08.2001
(73) Patentinhaber: K.U. Leuven Research & Development, 3000 Leuven (BE); Pflug, Jochen, 65207 Wiesbaden (DE)
(72) Erfinder: PFLUG, Jochen, D-65207 Wiesbaden (DE); VERPOEST, Ignace, B-3010 Kessel-Lo (BE)
(74) Vertreter: Bird, Ariane
(86) Internationale Anmeldenummer: EP9908151
(87) Internationale Veröffentlichungsnummer: WO00032382

(56) Entgegenhaltungen:
- WO-A-97/03816
- DE-A- 19 716 637
- FR-A- 1 509 018

## Beschreibung

Die Erfindung bezieht sich auf eine vorzugsweise thermoplastische Faltwabe sowie auf ein Verfahren zur Herstellung von vorzugsweise thermoplastische Faltwaben.

Faltwaben dieser Art (WO 97/03816) werden aus einer einzelnen Schicht (einem flächigen Körper) kontinuierlich hergestellt. Die hexagonalen Zellen werden hierin nach dem Einbringen von Schnitten gefaltet und sind von Deckschichtanschlußflächen überbrückt Bei allen bekannten Faitwaben dieser Art sind zunächst Schnitte, die den flächigen Körper schwächen einzubringen. Es wird im aligemeinen angenommen, daß ohne Schnitte die in die Schicht eingelassenen drei-dimensionalen Gebilde durch das Falten derart verzogen werden, daß die dadurch gebildeten Zellen schwächer werden.

Der Erfindung liegt die Aufgabe zugrunde, Faltwaben mit einer guten Anbindung an die Deckschichten ohne das Einbringen von Schnitten herstellen zu können. Die gestellte Aufgabe wird aufgrund der Maßnahmen der Ansprüche 1 und 4 gelöst und durch weitere Merkmale der Unteransprüche weiterentwickelt.

Bei der Erfindung wird der flächige Körper (eine Materialbahn) senkrecht zur Materialebene plastisch verformt und in Förderrichtung eingeengt (gefaltet) bis sich die Zellwände treffen und verbunden werden können. Auf diese Weise bildet sich eine Wabenschicht mit geschlossenen Deckschichten. Das Material kommt femer in den Deckschichtebenen abwechselt doppelt zu liegen und gewährleistet dadurch eine gute flächige Anbindung aller Wabenzellwände an beide Deckschichten.

Ein Ausführungsbeispiei wird anhand der Zeichnungen beschrieben.
Dabei zeigt :
Fig. 1: Die plastischen Verformungen senkrecht zur Materialbahn,
Fig. 2: Den Faltprozeß zur Bildung der Wabenzellen,
Fig. 3: Eine Reihe hexagonale Wabenzellen nach dem Verbinden der Zellwände,
Fig. 4: Eine perspektivische Darstellung von Zwischenzuständen bei der Herstellung der Faltwabe (nach oben geformte Bereiche),
Fig. 5: Eine weiter perspektivische Darstellung von Zwischenzuständen bei der Herstellung der Faltwabe (nach unten geformte Bereiche).

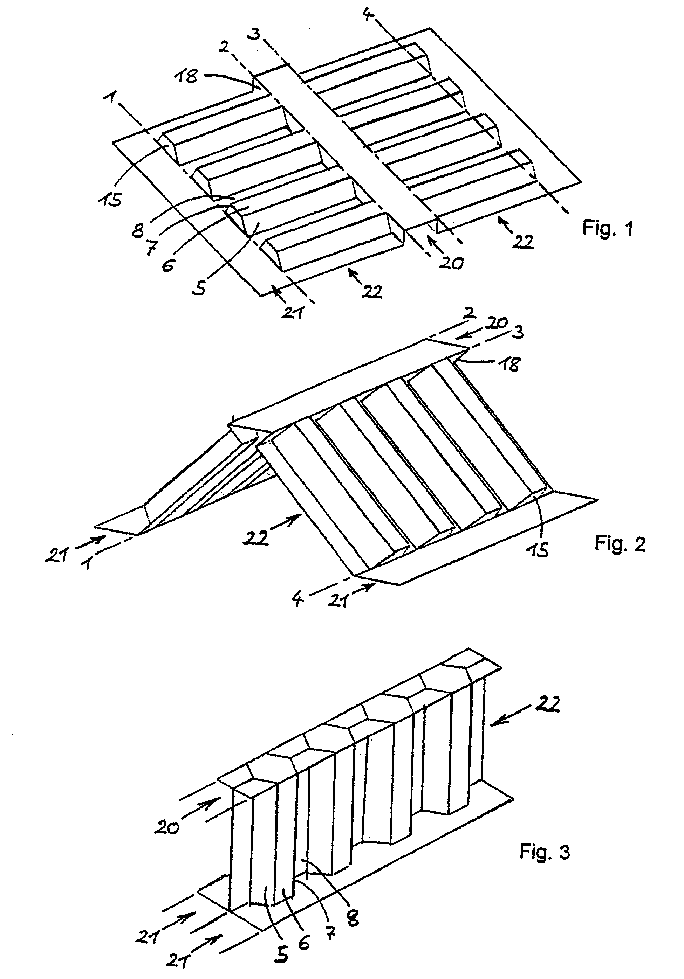

Fig. 1 zeigt einen Abschnitt einer ebenen Bahn aus dünnem thermoplastischem Kunststoff, Faserverbundwerkstoff, plastisch formbarem Papier oder Metallblech, das plastische Verformungen senkrecht zur Materialbahn aufweist. In den Bereichen 20 wird das Material völlig, d.h. rechteckig, in den Bereichen 22 vieleckig, z.B. trapezförmig, sinusförmig kreisförmig oder desgleichen aus der Bahnebene geformt. Da die Flächenbereiche 8 in der Bahnebene verbleiben, wird das Material in den Flächenbereichen 5 und 7 plastisch verformt. Ferner wird das Material an den Übergängen zu den Bereichen 20 und 21 gedehnt und bildet die Flächen 15 und 18, die im wesentlich senkrecht zur Materialbahn sind. Die Verformung des Bahnmaterials in den Bereichen 22 dient der Bildung von drei-dimensionalen Formen, welche die Wände von Zellenhälften in dem gefalteten Endprodukt bilden. Die Zellen sind strukturelle und belastbare Elemente des gefalteten Endproducts, deren Wänden sich quer zur Längsrichtung des gefalteten Endprodukts erstrecken. In dem gefalteten Endprodukt sind die durch Falten gebildeten Zellen vorzugsweise zylindrisch in Querschnitt, wobei die Zylinderachse sich quer zu der Längsrichtung des gefalteten Endprodukts erstreckt. Die Querchnittsform einer Zelle kann beliebig gewählt werden, z.B. kreisförmig oder vieleckig, insbesondere geradzahlig vieleckig, z.B. sechseckig. Die jetzige Erfindung schließt eine Mischung aus Zellen mit unterschiedlichen Querschnittsformen ein.

Fig. 2 zeigt einen weiteren Zwischenzustand der Herstellung der Faltwabe. Die Einengung der verformten Materialbahn geschieht durch den Faltvorgang der Materialbahn um die Faltlinien 1, 2, 3 und 4. Durch diesen Faltvorgang falten sich die Flächen 18 auf die Flächen des Bereichs 20 und die Flächen 15 kommen flächig auf den Flächen der Bereiche 21 zu liegen. Eine Verformung der in der Materialbahn geformten trapezförmigen Strukturen wird dadurch vermieden. Dieser Faltvorgang kann zum Beispiel durch ein flaches heißes Werkzeug erfolgen welches auch die sich treffenden Zellwände, für eine Verschweißung vorwärmen könnte.

Fig. 3 zeigt eine Reihe hexagonale Wabenzellen nach dem Verbinden der Zellwände. Durch das Zusammenfalten stoßen die benachbarten Bereiche 20 (bzw. 21) aneinander und können vorzugsweise miteinander zu belastbaren Deckschichten verbunden werden. Es kann unter Umständen auf eine komplette flächige Verbindung der Zellwände verzichtet werden. Nach einer Verbindung der Zellwände und der benachbarten Bereiche 20 (bzw. 21) ergeben sich vorzugsweise luftdicht verschlossene hexagonale Räume.

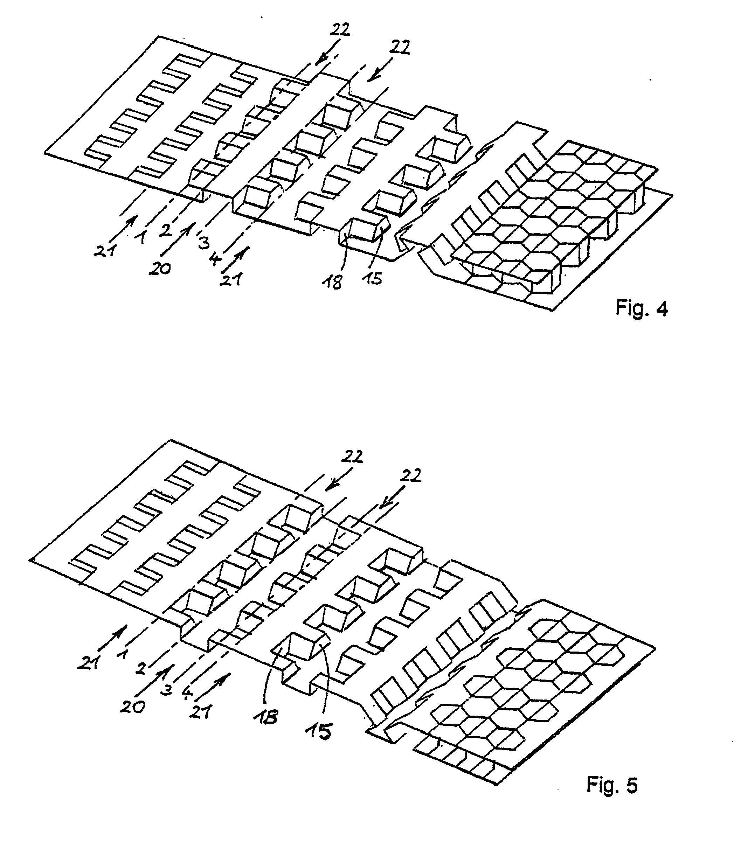

Fig. 4 zeigt Zwischenzustände bei der Herstellung der Faltwabe mit nach oben geformten Bereichen. Die Herstellung kann automatisiert werden und kontinuierlich erfolgen. Es bietet sich an, rotierende Werkzeuge zu verwenden. Demzufolge ist ein wesentlicher Aspect der jetzigen Erfindung, eine Faltwabe durch schnittlose kontinuierliche plastische Rotationsverformung einer Materialbahn zu bilden. Die plastische Verformung kann zum Beispiel durch ein "Rotations-Thermoforming"-Prozeß, wie er bei der Herstellung von Luftpolsterfolie üblich ist, geschehen. Dort wird das Material durch eine profilierte Walze mit Hilfe eines Vakuums tiefgezogen. Gegeneinander laufende Walzen mit ineinander greifenden Profilen können auch verwendet werden.

Fig. 5 zeigt Zwischenzustände bei der Herstellung einer weiteren Faltwabe gemäß der jetzigen Erfindung mit nach unten geformten Bereichen. Zusätzliche Deckschichten zur Aufnahme höherer Zug- und Drucklasten können direkt oder später an der Wabe befestigt bzw. aufgeklebt werden.

Je nach Ausgangsmaterial kann die Faltwabe bereits ohne Deckschichten eine steife Leichtbau-Sandwichplette bilden und für Strukturbauteile oder als Verpackungsmaterial verarbeitet werden.

Die jetzige Erfindung schließt nicht aus, daß nach der Formung der trapez-, sinus- oder kreisförmigen Gebilde in der Materialbahn, und insbesondere nach dem Falten der verformten Materialbahn, Risse enstehen. Dies kann soweit führen, daß die Teilflächen (15 bzw.18) ganz oder teilweise verschwinden.

## Patentansprüche

1. Faltwabe, gebildet aus einer Mehrzahl von in Reihen angeordneten Zellen, mit den folgenden Merkmalen : Die Zellen weisen seitliche Zellwände (5,6,7,8) auf, die ringförmig aneinander anschließen und zu den Öffnungsseiten der Zelle hin von Deckschichtebenen begrenzt werden;
die Faltwabe besitzt eine Mehrzahl von vieleckigen, sinus- oder kreis-förmigen Bereichen (22) und streifenförmige Bereiche (20,21);
die vieleckig, sinus- oder kreisförmig geformten Bereiche (22) sind gegenüber den streifenförmigen Bereichen (20,21) um etwa 90° gefaltet; **dadurch gekennzeichnet, daß** die Zellen jeweils in beiden Deckschichtebenen vollständig überbrückt sind; die Faltwabe aus einem im wesentlichen ungeschnittenen flächigen Körper geformt ist;
die Mehrzahl von vieleckigen, sinus- oder kreis-förmigen Bereichen (22) plastisch geformt sind; und die durch die plastische Verformung entstandenen Teilflächen (15 bzw.18) auf den streifenförmigen Bereichen (21 bzw. 20) in den Deckschichtebenen liegen.

2. Faltwabe nach Anspruch 1, **dadurch gekennzeichnet, daß** zumindest ein Teil (8) der Zellwände (5,6,7,8) ganz oder teilweise dauerhaft miteinander verbunden sind.

3. Faltwabe nach einem der vorhergehenden Ansprüche, **dadurch gekennzeichnet, daß** die, durch die plastische Verformung entstandenen Teilflächen (15 bzw.18) ganz oder teilweise dauerhaft mit den, auf ihnen liegenden Flächen der streifenförmigen Bereiche (21 bzw. 20) verbunden sind.

4. Faltwabe nach einem der vorhergehenden Ansprüche, **dadurch gekennzeichnet, daß** der Körper ein thermoplastischer Kunststoff, Faserverbundwerkstoff oder ein plastisch formbareres Papier oder Metallblech ist.

5. Faltwabe nach einem der vorhergehenden Ansprüche, **dadurch gekennzeichnet, daß** die Zellen alle gleich sind.

6. Verfahren zur Herstellung einer Faltwabe nach Anspruch 1 mit den folgenden Schritten:
a) ein flächiger Körper aus einem plastisch verformbaren Material wird bereitgestellt; **dadurch gekennzeichnet, daß**
b) der flächige Körper in streifenförmigen Bereichen (22) vieleckig, sinus- oder kreisförmig plastisch verformt wird, wobei die zwischen diesen Bereichen liegenden streifenförmigen Bereiche (20, 21) abwechselnd ganz (20) oder gar nicht (21) aus der Ebene des flächigen Ausgangskörpers geformt werden;
c) die vieleckig, sinus- oder kreisförmig plastisch geformten Bereiche (22) gegenüber den streifenförmigen Bereichen (20,21) um etwa 90° gefaltet werden.

7. Verfahren nach Anspruch 6, **dadurch gekennzeichnet, daß** zumindest ein Teil (8) der sich berührenden Flächen und/oder Kanten fest miteinander verbunden werden.

8. Verfahren nach Anspruch 6 oder 7, **dadurch gekennzeichnet, daß** das verformbare Material ein thermoplastischer Kunststoff, Faserverbundwerkstoff oder ein plastisch verformbareres Papier oder Metallblech ist.

9. Verfahren nach einem der Ansprüche 6 bis 8, **dadurch gekennzeichnet, daß** die vieleckige, sinus- oder kreisförmige plastische Verformung durch ein schnittloses Rotationsverfahren durchgeführt wird.

10. Verfahren nach einem der Ansprüche 6 bis 8, **dadurch gekennzeichnet, daß** die Verformung durch ein Rotations-Thermoformverfahren durchgeführt wird.

## Claims

1. Folded honeycomb, formed from a plurality of cells which are arranged in rows, having the following features: the cells have lateral cell walls (5, 6, 7, 8) which adjoin one another in the form of a ring and are bounded towards the opening sides of the cell by covering-layer planes;
the folded honeycomb has a plurality of polygonal, sinusoidal or arcuately shaped regions (22) and strip-shaped regions (20, 21);
the polygonally, sinusoidally or arcuately shaped regions (22) are folded through about 90θ with respect to the strip-shaped regions (20, 21);
**characterized in that** the cells are each completely bridged in both covering-layer planes; the folded honeycomb is formed from a substantially uncut, flat body;
the plurality of polygonal, sinusoidal or arcuately shaped regions (22) are plastically formed; and the part-areas (15 respectively 18) produced by the plastic forming lie on the strip-shaped regions (21 respectively 20) in the covering-layer planes.

2. Folded honeycomb according to Claim 1, **characterized in that** at least part (8) of the cell walls (5, 6, 7, 8) are completely or partly permanently connected to one another.

3. Folded honeycomb according to one of the preceding claims, **characterized in that** the part-areas (15 respectively 18) produced by the plastic forming are wholly or partly permanently connected to the areas of the strip-shaped regions (21 respectively 20) lying on them.

4. Folded honeycomb according to one of the preceding claims, **characterized in that** the body is a thermoplastic polymer, a fibre composite material or a plastically deformable paper or metal sheet.

5. Folded honeycomb according to one of the preceding claims, **characterized in that** the cells are all the same.

6. Process for producing a folded honeycomb according to Claim 1, comprising the following steps:
a) a flat body comprising a plastically deformable material is provided; **characterized in that**
b) the flat body is polygonally, sinusoidally or arcuately plastically deformed into strip-shaped regions (22), the strip-shaped regions (20, 21) located between these regions being alternately formed wholly (20) or not at all (21) out of the plane of the flat initial body;
c) the polygonally, sinusoidally or arcuately plastically formed regions (22) are folded through about 90° with respect to the strip-shaped regions (20, 21).

7. Process according to Claim 6, **characterized in that** at least part (8) of the mutually contacting surfaces and/or edges are firmly connected to one another.

8. Process according to Claim 6 or 7, **characterized in that** the deformable material is a thermoplastic polymer, fibre composite material or a plastically deformable paper or metal sheet.

9. Process according to one of Claims 6 to 8, **characterized in that** the polygonal, sinusoidal or arcuate plastic deformation is carried out by means of a non-cutting rotary process.

10. Process according to one of Claims 6 to 8, **characterized in that** the deformation is carried out by a rotary thermoforming process.

## Revendications

1. Structure alvéolaire pliée, formée d'une pluralité de cellules disposées en rangées, ayant les caractéristiques suivantes : les cellules présentent des parois de cellule latérales (5, 6, 7, 8) qui se raccordent les unes aux autres en formant un anneau et qui sont limitées vers les côtés d'ouverture de la cellule par des plans de couches de recouvrement ;
la structure alvéolaire pliée possède une pluralité de régions de forme (22) polygonale, sinusoïdale ou circulaire et de régions en forme de bande (20, 21) ;
les régions (22) de forme polygonale, sinusoïdale ou circulaire sont pliées d'environ 90° par rapport aux régions en forme de bande (20, 21) ;
**caractérisée en ce que** les cellules sont complètement recouvertes respectivement dans les deux plans de couches de recouvrement ; la structure alvéolaire pliée est formée d'un corps plat essentiellement non-coupé ;
la pluralité de régions de forme polygonale (22), sinusoïdale ou circulaire est formée de manière plastique ; et les surfaces partielles (15, respectivement 18) obtenues par la déformation plastique se trouvent sur les régions en forme de bande (21, respectivement 20) dans les plans de couches de recouvrement.

2. Structure alvéolaire pliée selon la revendication 1, **caractérisée en ce qu'**au moins une partie (8) des parois de cellule (5, 6, 7, 8) sont connectées de manière durable complètement ou partiellement les unes aux autres.

3. Structure alvéolaire pliée selon l'une quelconque des revendications précédentes, **caractérisée en ce que** les surfaces partielles (15, respectivement 18) obtenues par la déformation plastique sont connectées de manière durable complètement ou partiellement aux surfaces des régions en forme de bande (21, respectivement 20) reposant sur celles-ci.

4. Structure alvéolaire pliée selon l'une quelconque des revendications précédentes, **caractérisée en ce que** le corps est un polymère thermoplastique, un matériau composite renforcé par des fibres ou un papier ou une tôle métallique déformable plastiquement.

5. Structure alvéolaire pliée selon l'une quelconque des revendications précédentes, **caractérisée en ce que** les cellules sont toutes les mêmes.

6. Procédé de fabrication d'une structure alvéolaire pliée selon la revendication 1, comprenant les étapes suivantes :
a) un corps plat comprenant un matériau déformable plastiquement est prévu ; **caractérisé en ce que**
b) le corps plat est déformé plastiquement en forme polygonale, sinusoïdale ou circulaire en régions en forme de bande (22), les régions en forme de bande (20, 21) se trouvant entre ces régions étant mises en forme alternativement complètement (20) ou absolument pas (21) à partir du plan du corps initial plat ;
c) les régions (22) polygonales, sinusoïdales ou circulaires formées plastiquement sont pliées d'environ 90° par rapport aux régions en forme de bande (20, 21).

7. Procédé selon la revendication 6, **caractérisé en ce qu'**au moins une partie (8) des surfaces se touchant et/ou les arêtes sont connectées fermement les unes aux autres.

8. Procédé selon la revendication 6 ou 7, **caractérisé en ce que** le matériau déformable est un polymère thermoplastique, un matériau composite renforcé par des fibres ou un papier ou une tôle métallique déformable plastiquement.

9. Procédé selon l'une quelconque des revendications 6 à 8, **caractérisé en ce que** la déformation plastique polygonale, sinusoïdale ou circulaire est réalisée par un procédé de rotation sans découpe.

10. Procédé selon l'une quelconque des revendications 6 à 8, **caractérisé en ce que** la déformation est réalisée par un procédé de thermoformage par rotation.
